# FASCICULE DE BREVET EUROPEEN

(11) **EP 4 241 030 B1**
(45) Date de publication et mention de la délivrance du brevet: **10.09.2025**
(21) Numéro de dépôt: 21798360.0
(22) Date de dépôt: 21.10.2021
(51) Int. Cl.: F28D 1/03, H01M 10/613, B60L 58/26, F28D 21/00

(54) **DISPOSITIF DE RÉGULATION THERMIQUE, NOTAMMENT DE REFROIDISSEMENT POUR VÉHICULE AUTOMOBILE**
TEMPERIERVORRICHTUNG, INSBESONDERE KÜHLEINRICHTUNG FÜR EIN KRAFTFAHRZEUG
TEMPERATURE CONTROL DEVICE, IN PARTICULAR A COOLING DEVICE FOR A MOTOR VEHICLE

(30) Priorité: 04.11.2020 FR 2011331
(43) Date de publication de la demande: 13.09.2023
(73) Titulaire: VALEO SYSTEMES THERMIQUES, 78320 Le Mesnil Saint-Denis (FR)
(72) Inventeur: PERRIN, Thibaut, 78322 Le Mesnil-Saint-Denis Cedex (FR); TONDELLI, Stephane, 78322 Le Mesnil-Saint-Denis Cedex (FR); SUN, Jianqi, Jingzhou Shashi, Hubei Province 434007 (CN)
(74) Mandataire: Valeo Powertrain Systems
(86) Numéro de dépôt international: PCT/EP2021/079222
(87) Numéro de publication internationale: WO 2022/096278

(56) Documents cités:
- EP-B1- 2 828 922
- WO-A1-01/95688
- WO-A1-2020/178519
- WO-A1-2020/193362
- FR-A- 1 225 934

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule automobile.

Les batteries de véhicules, en particulier pour véhicules électriques ou véhicules hybrides, doivent autant que possible être maintenues à température souhaitée, raison pour laquelle on utilise des dispositifs dits de refroidissement pour batteries de véhicules. Ces dispositifs de refroidissement comprennent des plaques de refroidissement à travers lesquelles circule un liquide de refroidissement. Les plaques de refroidissement sont installées, autant que possible sans espace, sur le côté extérieur des batteries dans le but de dissiper la chaleur ou bien de chauffer la batterie. On connaît des dispositifs de refroidissement dans lesquels la plaque de refroidissement est composée de deux parties de plaque qui sont normalement fixées directement l'une à l'autre. Ici, la première partie de plaque est de préférence plane, et la seconde partie de plaque est de préférence une feuille de métal emboutie ou déformée qui présente des dépressions en méandres. Lesdites dépressions sont fermées par la partie de plaque plane qui est fixée à la partie de plaque emboutie, de sorte que des conduits de réfrigérant sont formés. Le brevet EP 2 828 922 B1 décrit un tel dispositif.

La demande de brevet FR1225934A divulgue un dispositif de régulation thermique pour composant électrique susceptible de dégager de la chaleur lors de son fonctionnement selon l'état de l'art, ce dispositif comportant une plaque supérieure et une plaque inférieure assemblée avec la plaque supérieure pour former ensemble une pluralité de canaux de circulation pour un fluide caloporteur, dispositif comprenant une zone d'entrée de fluide et une zone de sortie de fluide, ces zones d'entrée et de sortie étant, la pluralité de canaux de circulation de fluide comprenant au moins deux groupes de canaux de passe formant chacun une passe de fluide dans une région thermiquement opérante, ces canaux ayant notamment tous la même section de passage de fluide sur la majeure partie de leur longueur, la pluralité de canaux comprenant en outre au moins un canal d'entrée reliant la zone d'entrée et l'un des groupes de canaux de passe et au moins deux canaux de sortie reliant l'un des groupes de canaux de passe à la zone de sortie de fluide, les canaux de passe de ce groupe se subdivisant en autant de sous-groupes de canaux que de canaux de sortie, chaque sous-groupe de canaux de passe rejoignant le canal de sortie qui lui est associé.

L'invention vise à améliorer ce type de dispositif.

L'invention a pour objet un dispositif de régulation thermique selon la revendication 1.

Grâce à l'invention, le nombre de canaux et leur répartition en sous-groupes peuvent varier en fonction des besoins. Il est important que le nombre de canaux dans la dernière passe soit assez grand pour assurer une bonne homogénéité thermique.

De plus un nombre élevé de canaux permet d'avoir une section de passage de ceux-ci relativement faible, limitant ainsi les pertes de charge.

L'invention permet également d'avoir des canaux standards et les besoins thermiques sont satisfaits en jouant sur leur nombre et leur motif de disposition.

Notamment l'invention s'appuie sur la façon dont les canaux se répartissent au début d'une passe, et la façon dont les canaux convergent à la fin d'une passe.

L'invention permet avantageusement d'équilibrer les débits de fluide dans les canaux, et en conséquence d'homogénéiser la température de la plaque.

Selon un aspect de l'invention, les canaux d'une passe définissent un schéma en ramification en début et à la fin de la passe.

Par exemple, deux canaux peuvent être joints en un nœud pour former un canal commun, et le canal commun rejoint un autre canal commun issu d'un nœud de jonction entre deux ou plusieurs autres canaux.

Selon un aspect de l'invention, le nombre de canaux des sous-groupes extérieurs comprend un de plus que le nombre de canaux du sous-groupe intercalaire, par exemple le nombre de canaux des sous-groupes extérieurs est de 5, et le nombre de canaux du sous-groupe intercalaire est de 4.

Dans un autre exemple, le nombre de canaux des sous-groupes extérieurs est de 4, et le nombre de canaux du sous-groupe intercalaire est de 3.

Dans un exemple l'un des sous-groupes extérieurs comporte 5 canaux et l'autre 4 canaux.

Selon un aspect de l'invention, le groupe de canaux relié au canal d'entrée comporte plus de 2 canaux, notamment plus 4 canaux, voire au moins 6 canaux.

Selon un aspect de l'invention, les canaux dans chaque groupe sont parallèles entre eux sur une majeure partie de leur longueur.

Selon un aspect de l'invention, ces canaux sont sensiblement rectilignes sur la majeure partie de leur longueur.

Selon un aspect de l'invention, le nombre de canal d'entrée est plus petit que le nombre de canaux de sortie, par exemple le nombre de canal d'entrée est d'un et le nombre de canaux de sortie est de deux ou plus.

Selon un aspect de l'invention, les groupes de canaux de passe présente des nombres de canaux qui diffèrent d'une passe à l'autre. Notamment ce nombre augmente, ou reste stable, au fur et mesure des passes, dans le sens de l'entrée de fluide vers la sortie de fluide. Autrement dit les groupes de canaux de passe présente des nombres de canaux qui diffèrent d'une passe à l'autre, notamment ce nombre de canaux augmente, passe après passe, au fur et à mesure de l'écoulement.

Selon un aspect de l'invention, dans l'une au moins des passes, les canaux de cette passe sont disposés suivant une organisation ramifiée avec des nœuds où au moins deux canaux de la passe se connectent soit pour répartir, dans le cas d'un nœud de répartition, le fluide provenant d'un canal dans deux ou plus canaux, soit pour collecter, pour un nœud de collecte, le fluide provenant de deux canaux ou plus vers un canal de collecte, ces nœuds étant disposés de sorte à permettre un équilibrage de charge.

Selon un aspect de l'invention, dans la passe considérée, le nombre additionné de nœuds de répartition et de nœuds de collecte est le même pour tous les canaux de la passe.

Selon un aspect de l'invention, dans la passe considérée, le nombre additionné de nœuds de répartition et de nœuds de collecte varie selon les canaux de la passe d'au plus d'un canal, voire d'au plus de deux canaux.

Selon un aspect de l'invention, la passe présente une organisation ramifiée avec deux nœuds de répartition et deux nœuds de collecte, et l'un des canaux quitte en premier le canal collectif par le nœud de répartition en laissant les deux autres canaux se répartir plus en aval via le nœud de répartition, en aval du nœud de répartition, ce canal rejoint le canal par le nœud de collecte, qui est en amont de l'autre nœud de collecte, nœud qui collecte les canaux déjà ensemble avec le canal.

Lorsque qu'un canal est favorisé dans la zone de répartition par exemple le canal 81, il faut alors le pénaliser dans la zone de collecte.

Ainsi l'invention permet d'équilibrer les pertes de charges et donc d'homogénéiser les débits.

Selon un aspect de l'invention, pour une passe prédéfinie, dans la zone de répartition du débit, le débit est divisé en deux canaux après le nœud de répartition. Puis ces deux canaux sont eux-mêmes divisés en deux, au niveau des nœuds de répartition, respectivement pour alimenter d'autres canaux après l'un de ces nœuds de répartition, et les canaux après le nœud. Dans la zone de collecte, les nœuds sont symétriques à ceux de la zone de répartition. Ainsi, les canaux convergent en un canal par le nœud de collecte, et les autres canaux convergent en un second canal par l'autre nœud de collecte. Puis ces deux canaux se joignent au niveau du nœud.

Selon un aspect de l'invention, le nombre de canaux d'entrée est compris 1 et 2.

Selon un aspect de l'invention, le nombre de canaux de sortie est compris 3 et 6.

Par exemple, il peut être prévu 2 canaux d'entrée et 4 canaux de sortie.

Par exemple encore, il peut être prévu 2 canaux d'entrée et 5 ou 6 canaux de sortie.

L'invention a encore pour objet un système comportant un composant électrique susceptible de dégager de la chaleur lors de son fonctionnement, notamment pour un module de stockage d'énergie électrique, et un dispositif de refroidissement décrit ci-dessus, agencé pour refroidir le composant, ce composant ou batterie étant en contact thermique avec la plaque supérieure du dispositif de refroidissement.

D'autres caractéristiques et avantages de l'invention apparaitront plus clairement à la lecture de la description suivante, donnée à titre d'exemple illustratif et non limitatif, et des dessins annexés parmi lesquels :
- la [Figure 1] illustre, schématiquement et partiellement, un dispositif selon de refroidissement ;
- la [Figure 2] illustre, schématiquement et partiellement, le dispositif de la [Figure 1] selon une vue différente,
- la [Figure 3] illustre, schématiquement et partiellement, un dispositif selon un autre exemple avec des détails sur une partie des plaques :
- la [Figure 4] illustre, schématiquement et partiellement, un dispositif de régulation selon un autre exemple de réalisation de l'invention,
- la [Figure 5] illustre, schématiquement et partiellement, le dispositif de la figure 4 avec des flèches montrant les passes de fluide,
- la [Figure 6] illustre, schématiquement et partiellement, un dispositif de régulation selon un autre exemple de réalisation de l'invention,
- la [Figure 7] illustre, schématiquement et partiellement, un dispositif de régulation selon un autre exemple de réalisation de l'invention
- la [Figure 8] illustre, schématiquement et partiellement, un dispositif de régulation selon un autre exemple de l'invention,
- la [Figure 9] illustre, schématiquement et partiellement, un dispositif de régulation selon un autre exemple de l'invention.

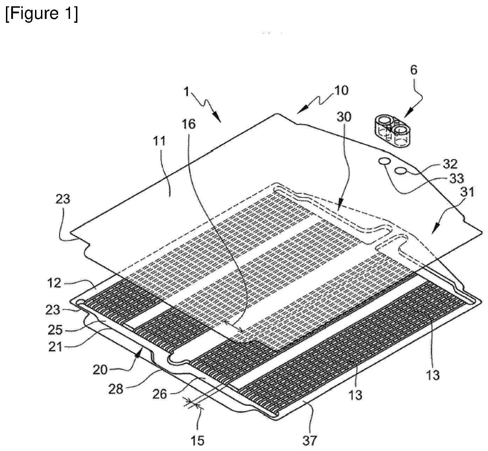

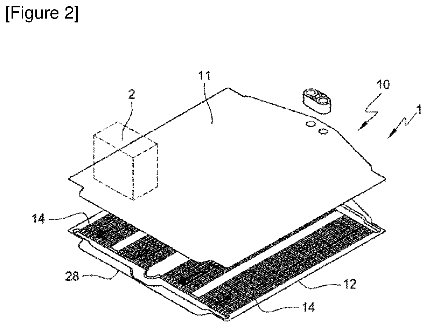

On a représenté sur la [Figure 1] et sur la [Figure 2] un système 1 comportant un ensemble de cellules de batterie 2 à refroidir, par exemple rangées suivant deux rangées ou plus, et un dispositif de refroidissement 10 agencé pour refroidir les cellules 2, qui sont en contact thermique avec une plaque supérieure du dispositif de refroidissement 10, comme expliqué plus bas.

Le dispositif de régulation thermique 10 comporte une plaque supérieure 11, une plaque inférieure 12 assemblée avec la plaque supérieure 11 pour former ensemble une pluralité de canaux 13 de circulation pour un fluide caloporteur, notamment un fluide réfrigérant, notamment un fluide choisi parmi les fluides réfrigérants suivants R134a, R1234yf ou R744. Les canaux 13 sont regroupés par groupes 14 de canaux, les canaux d'un groupe s'étendant sensiblement parallèlement les uns aux autres avec un espacement prédéterminé entre canaux voisins appelé espacement intra-groupe 15. Les canaux 13 présentent chacun une section transversale comprise entre 1 mm2 et 15 mm2, étant par exemple localement d'environ 11 mm2 dans chaque canal. Les canaux 13 s'étendent sensiblement sur toute la longueur des plaques.

Les plaques sont réalisées en aluminium.

Le dispositif de refroidissement comporte une chambre de virage 20 agencée pour conduire le fluide sortant de l'un des groupes 14 de canaux vers l'un des autres groupes de canaux. La chambre de virage 20 est formée par les plaques supérieure 11 et inférieure 12, par exemple en aluminium. La plaque inferieure 12 comporte une zone emboutie 21 agencée pour participer à la formation de la chambre de virage 20. La zone emboutie 21 est fermée avec l'autre des plaques 11 qui est plane pour former la chambre de virage 20. La chambre de virage 20 s'étend sur un côté 23 des plaques.

Le dispositif de refroidissement comporte une zone d'entrée 30 de fluide réfrigérant des canaux, cette zone d'entrée étant formée entre les deux plaques 11 et 12. Cette zone d'entrée 30 de fluide est agencée pour alimenter tous les canaux 13 de circulation de fluide qui débouchent sur la chambre de virage 20, à savoir les canaux dans lesquels le fluide s'écoule vers la chambre de virage. Cette zone d'entrée 30 est commune aux groupes 14 de canaux. Le dispositif de refroidissement comporte une zone de sortie 31 de fluide réfrigérant des canaux, cette zone de sortie étant formée entre les deux plaques 11 et 12. Cette zone de sortie 31 de fluide est agencée pour conduire le fluide sortant de tous les canaux 13 de circulation de fluide qui proviennent de la chambre de virage. Cette zone de sortie 31 est commune aux deux groupes de canaux. Les zones d'entrée 30 et 31 et de sortie sont adjacentes à un orifice d'entrée 32, respectivement de sortie 33. Les orifices d'entrée 32 et de sortie 33 sont reliés à un bloc de raccord 6 de tubulures.

La plaque inférieure 2 comporte des zones 37 de section transversale arrondie, notamment des zones embouties, pour former avec la plaque supérieure les canaux 13. Les zones d'entrée 30 et de sortie 31 comportent des zones embouties de la plaque inferieure 12.

Préférentiellement le fluide caloporteur peut être choisi parmi les fluides réfrigérants d'appellation R134a, R1234yf ou R744.

Les cellules de batterie comprennent par exemple une pluralité de batteries au lithium-ion (Li-ion) pour une utilisation dans un véhicule hybride. Dans un autre mode de réalisation, la pluralité de cellules de batterie sont des batteries Li-ion pour une utilisation dans un véhicule électrique à batterie. La chambre de virage 20 et/ou la zone d'entrée 30 et/ou la zone de sortie 31 comportent, le cas échéant, des éléments de renfort pour renforcer la tenue mécanique dans ces zones qui sont potentiellement de plus forte section.

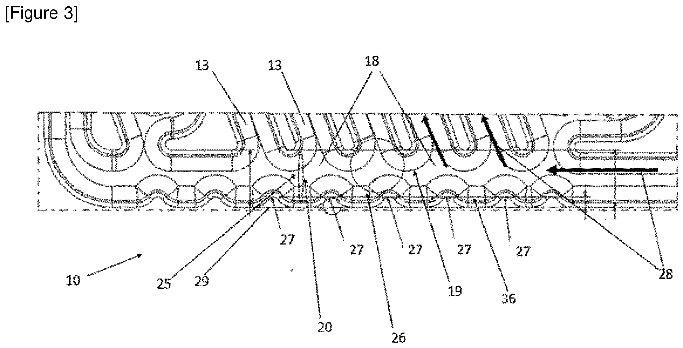

On a représenté sur la [Figure 3] un détail d'un dispositif reprend la plupart des éléments de l'exemple décrit précédemment.

Il sera ici davantage décrit une chambre de virage et les canaux qui s'y raccordent.

Des canaux 13 débouchent dans une chambre de virage 20 grâce à laquelle le fluide peut accomplir un virage.

Les flèches 28 matérialisent le sens de l'écoulement du fluide dans les canaux 13 et la chambre de virage 20.

La chambre de virage 20 comporte des éléments de renfort mécanique 27 formés sur une paroi de cette chambre de virage 20, chaque élément de renfort 27 étant agencé pour améliorer la tenue mécanique de la chambre contre de potentielles déformations sous l'action d'une pression élevée.

Chaque élément de renfort 27 s'étend sur toute la hauteur de la chambre de virage 20.

La chambre de virage 20 et les canaux 13 présentent chacun une longueur mesurée suivant un sens d'écoulement du fluide, et chaque élément de renfort 27 s'étend sur une partie seulement de la longueur de la chambre de virage 20, ici moins de 1/5 ou 1/8 ou 1/10 de la longueur totale de la chambre de virage 20 associée.

Les éléments de renfort 27 sont prévus le long de la chambre de virage 20, cette pluralité d'éléments de renfort étant espacés les uns des autres de manière régulière.

Ces éléments de renfort 27 formés sur la chambre de virage 20 sont tous identiques, de même forme et de mêmes dimensions.

Des éléments de renfort de dimensions et/ou dimensions différents pourraient, en variante, être prévus.

Chaque élément de renfort 27 présente un profil arrondi lorsqu'il est observé dans une direction perpendiculaire aux plaques, ce profil arrondi présentant une concavité 29 dirigée vers l'extérieur de la chambre de virage 20 associé.

La concavité 29 présente un rayon de courbure, notamment de valeur inférieure à 5 mm, notamment inférieure à 2 mm. Le rayon de courbure est celui du cercle en pointillés sur la figure 3, avec une valeur de 1.1 mm.

Deux canaux voisins 13 se raccordent sur la chambre de virage 20 en des sections de raccord 18 de sorte qu'un espace 19 inter-canaux soit présent sur la chambre de virage 20 entre les deux sections de raccord 18 et l'élément de renfort 27 est situé dans cet espace inter-canaux, ici au milieu de cet espace inter-canaux.

Les éléments de renforts 27 sont disposés, avec un espacement régulier entre eux, le long d'une ligne 36 longeant la chambre de virage 20.

Les éléments de renfort 27 sont formés par emboutissage sur a plaque correspondante.

Les éléments de renfort 27 permettent d'avoir des sections de passage de fluide plus grandes tout en assurant une bonne tenue mécanique à la déformation. Cette augmentation de la section de passage du fluide réfrigérant s'accompagne d'une diminution de la perte de charge occasionnée. Le gain de section de passage peut être d'environ +40% par rapport à un design classique, sans élément de renfort.

Deux canaux de fluide voisins se raccordent à la chambre de virage, et l'élément de renfort 27 qui est formé sur une paroi latérale de la chambre de virage, en vis-à-vis de ces deux canaux de fluide, est disposé de sorte à pouvoir placer un cercle imaginaire 26 inscrit adjacent aux deux canaux voisins et à l'élément de renfort en vis-à-vis, ce cercle inscrit 26 ayant un diamètre inférieur à 15 mm.

On remarquera que la section de passage 25 de la chambre de virage 20 de fluide est augmentée de part et d'autre de chaque élément de renfort 27.

La chambre de virage 20 peut être agencée pour permettre un retournement de l'écoulement de fluide, ou de pour permettre une collecte de fluide en entrée ou en sortie de fluide. Dans ce dernier cas, la chambre de virage peut être appelée chambre de collecte d'entrée ou de sortie de fluide.

Dans une variante, un ou des éléments de renfort 27 peuvent être formés sur l'un au moins des canaux 13, notamment sur une portion non-linéaire de ce canal.

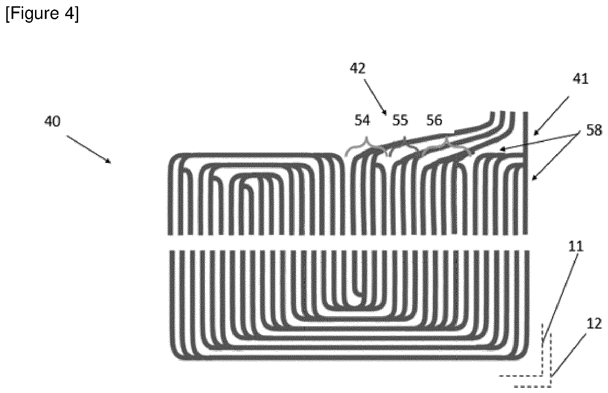

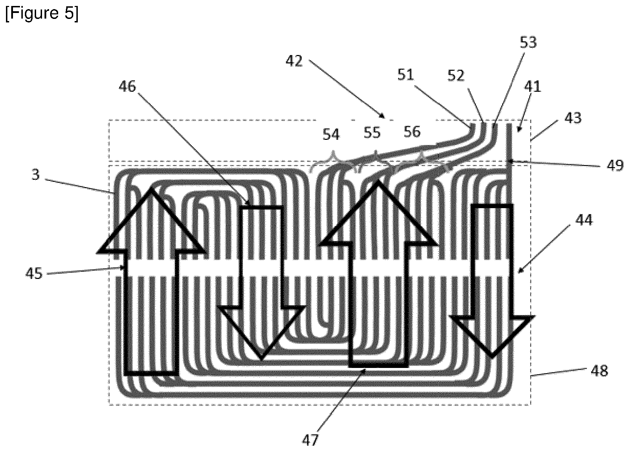

On a décrit en référence aux figures 4 et 5 un dispositif de régulation thermique 40 selon un exemple de réalisation de l'invention.

Ce dispositif de régulation thermique 40 comporte, à l'instar de ce qui est décrit plus haut, une plaque supérieure 11, une plaque inférieure 12 assemblée avec la plaque supérieure 11 pour former ensemble une pluralité de canaux 13 de circulation pour un fluide caloporteur, un fluide choisi parmi les fluides réfrigérants suivants R134a, R1234yf ou R744.

Ce dispositif 40 comprend une zone d'entrée 41 de fluide et une zone de sortie 42 de fluide.

Ces zones d'entrée 41 et de sortie 42 sont situées dans une région thermiquement inopérante 43 illustrée à la figure 5, cette région 43 n'étant pas en vis-à-vis du ou des composants à refroidir.

La pluralité de canaux 3 de circulation de fluide comprenant successivement quatre groupes 44, 45, 46 et 47 de canaux, dits canaux de passe, formant chacun une passe de fluide dans une région thermiquement opérante 48, région 48 qui se trouve en vis-à-vis du ou des composants à refroidir.

Les canaux 3, quelle que soit la passe considérée, ont tous la même section de passage de fluide sur la majeure partie de leur longueur.

Parmi la pluralité de canaux 3, figure un canal d'entrée 49 reliant la zone d'entrée 41 de fluide au groupe de canaux formant la première passe 44.

Parmi la pluralité de canaux 3, figurent également trois canaux de sortie reliant le groupe de canaux de la dernière passe 47 à la zone de sortie de fluide 42.

Les canaux 3 de la passe 47 se subdivisent en trois sous-groupes 54, 55 et 56 de canaux que de canaux de sortie 51, 52 et 53.

Les canaux 3 de chaque sous-groupe 54, 55 et 56 rejoignent le canal de sortie 51, 52 et 53 qui lui est associé.

Le nombre de canaux dans les sous-groupes 54, 55 et 56 sont différents.

Dans l'exemple décrit, le groupe de passe 44 directement relié au canal d'entrée 49 est adjacent au sous-groupe 56 de la dernière passe 47.

Ce sous-groupe 56 de la passe 47 présente un nombre de canaux, ici ce nombre de canaux étant égal à cinq, qui est le plus grand parmi les sous-groupes 54, 55 et 56 de cette passe 47.

Le nombre de canaux dans les sous-groupes extérieurs 54 et 56 est plus grand que le nombre de canaux du sous-groupe intercalaire 55 situé entre les deux sous-groupes extérieurs 54 et 56.

Par exemple, le nombre de canaux du sous-groupe extérieur 56 est de cinq, et le nombre de canaux du sous-groupe extérieur 54 est de quatre.

Le nombre de canaux du sous-groupe intercalaire 55 est de trois.

Les nombres de canaux dans les sous-groupes extérieurs sont différents 54 et 56, à savoir l'un étant cinq et l'autre étant quatre.

Le groupe 44 de canaux relié au canal d'entrée 49 comporte plus de deux canaux, ici deux sous-groupes 58 de trois canaux chacun.

Les canaux dans chaque groupe ou passe 44, 45, 46 et 47 sont parallèles entre eux sur une majeure partie de leur longueur.

Ces canaux 3 sont sensiblement rectilignes sur la majeure partie de leur longueur.

Le nombre de canaux augmente au fur et mesure des passes 44, 45, 46 et 47, dans le sens de l'entrée de fluide vers la sortie de fluide, avec potentiellement un nombre de passes qui reste constant sur deux passes ou plus.

La passe 44 comporte 2 sous-groupes de 3 canaux chacun.

La passe 45 comporte 3 sous-groupes de 3 canaux chacun.

La passe 46 comporte 3 sous-groupes de 3 canaux chacun.

La passe 47 est déjà décrite plus haut.

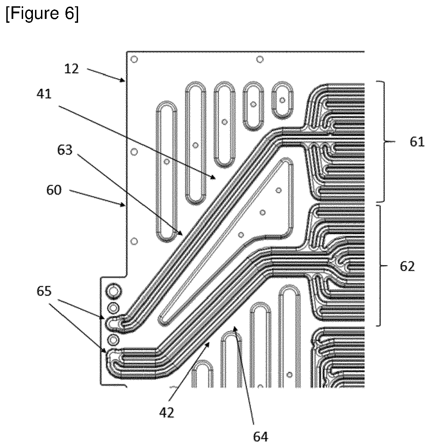

On a illustré sur la figure 6 un détail d'un dispositif de régulation thermique 60 selon un autre exemple de mise en œuvre de l'invention.

Comme pour l'exemple précédent, ce dispositif 60 comprend une zone d'entrée 41 de fluide et une zone de sortie 42 de fluide.

Comme on peut le voir, la première passe 61 est formée par une groupe de dix canaux au total repartis en deux sous-groupes.

La dernière passe 62 est formée par une groupe de onze canaux au total repartis en trois sous-groupes.

Bien entendu, les nombres de canaux et de sous-groupe peuvent varier en fonction des besoins de refroidissement, tout en garantissant une homogénéité thermique satisfaisante.

La plaque inferieure 12 est visible sur cette figure avec les zones embouties qui forment les canaux 3.

Les canaux d'entrée 63 et de sortie 64 s'étendent jusqu'à des orifices 65 d'entrée et de sortie de fluide. Ces orifices 65 d'entrée et de sortie de fluide sont agencés pour permettre de raccorder le dispositif de régulation thermique à un circuit de fluide, qui peut par exemple comprendre un ou plusieurs échangeurs de chaleur et un compresseur.

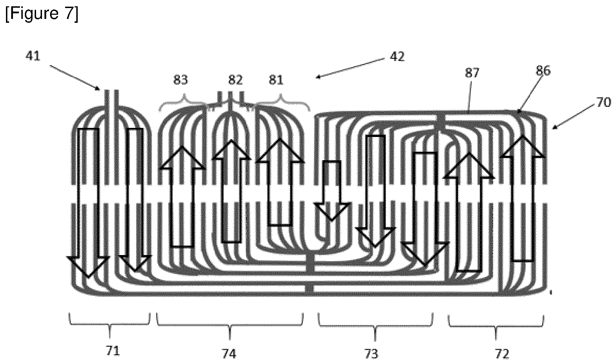

On a représenté sur la figure 7 un dispositif de régulation thermique 70 conforme à un autre exemple de réalisation de l'invention.

A l'instar des exemples précédents, ce dispositif 70 comporte une zone d'entrée 41 de fluide et une zone de sortie 42.

Les canaux définissant successivement 4 passes 71, 72, 73 et 74.

La première passe 71 est reliée à l'entrée de fluide, et la quatrième et dernière passe 74 est reliée à la zone de sortie de fluide.

Les passes 71 et 74 sont adjacentes.

Dans l'exemple décrit, la première passe 71 est composée de 8 canaux au total.

La deuxième passe 72 comprend 10 canaux au total.

La troisième passe 73 comprend 12 canaux au total.

La dernière passe 74 comprend 14 canaux au total, disposés suivant trois sous-groupe 81, 82 et 83 respectivement de 5, 4 et 5 canaux.

Le sous-groupe 83 qui est adjacent à la première passe 71 présente le nombre de plus grand de canaux parmi les trois sous-groupe.

Par exemple deux canaux peuvent être joints en un nœud 86 pour former un canal commun 87, et le canal commun rejoint un autre canal commun issu d'un nœud de jonction entre deux ou plusieurs autres canaux.

Par exemple, une ramification peut correspondre au cas suivant. Dans une zone de répartition du débit, le débit est divisé dans deux canaux après un nœud. Puis ces deux canaux sont eux aussi divisés en deux pour alimenter d'autres canaux.

Comme on peut le voir dans les exemples décrits plus haut, le nombre de canaux et leur répartition en sous-groupes peuvent varier en fonction des besoins. Il est important que le nombre de canaux dans la dernière passe soit assez grand pour assurer une bonne homogénéité thermique.

De plus un nombre élevé de canaux permet d'avoir une section de passage de ceux-ci relativement faible, limitant ainsi les pertes de charge.

L'invention permet également d'avoir des canaux standards et les besoins thermiques sont satisfaits en jouant sur leur nombre et leur motif de disposition.

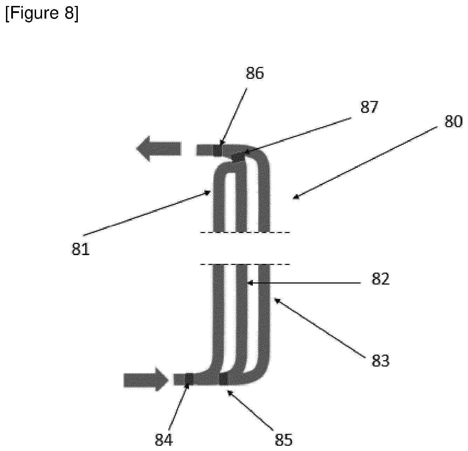

On a illustré sur la figure 8, pour l'une au moins des passes, des canaux de cette passe qui sont disposés suivant une organisation ramifiée avec des nœuds où au moins deux canaux de la passe se connectent soit pour répartir, dans le cas d'un nœud de répartition, le fluide provenant d'un canal dans deux ou plus canaux, soit pour collecter, pour un nœud de collecte, le fluide provenant de deux canaux ou plus vers un canal de collecte, ces nœuds étant disposés de sorte à permettre un équilibrage de charge.

Le nombre additionné de nœuds de répartition et de nœuds de collecte est le même pour tous les canaux de la passe.

Plus précisément dans l'exemple de la figure 8, la passe 80 présente une organisation ramifiée avec deux nœuds de répartition et deux nœuds de collecte, et le canal 81 quitte en premier le canal collectif par le nœud de répartition 84 en laissant les deux autres canaux 82 et 83 se répartir plus en aval via le nœud de répartition 85, en aval du nœud de répartition 84, ce canal 81 rejoint le canal 82 par le nœud de collecte 87, qui est en amont de l'autre nœud de collecte 86, nœud 86 qui collecte les canaux 81 et 82 déjà ensemble avec le canal 83.

Autrement dit le canal 81 est desservi en premier pour la répartition de fluide, avant les canaux 82 et 82. Lorsque qu'un canal est favorisé dans la zone de répartition par exemple le canal 81, il faut alors le pénaliser dans la zone de collecte.

Ainsi l'invention permet d'équilibrer les pertes de charges et donc d'homogénéiser les débits.

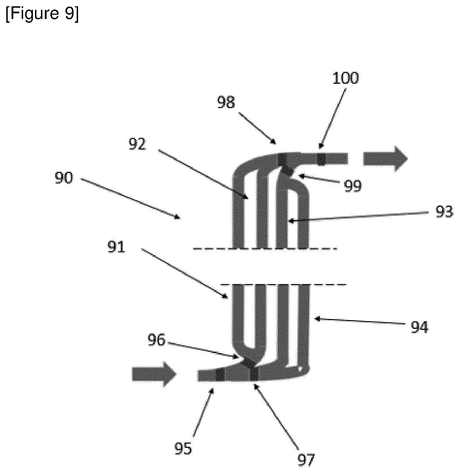

Dans un autre exemple illustré à la figure 9, pour la passe 90, dans la zone de répartition du débit, le débit est divisé en deux canaux après le nœud 95. Puis ces deux canaux sont eux-mêmes divisés en deux, au niveau des nœuds de répartition 96 et 97, respectivement pour alimenter les canaux 91 et 92 après le nœud de répartition 96, et les canaux 93 et 94 après le nœud 97. Dans la zone de collecte, les nœuds sont symétriques à ceux de la zone de répartition. Ainsi, les canaux 91 et 92 convergent en un canal par le nœud de collecte 98, et les canaux 93 et 94 convergent en un second canal par le nœud de collecte 99. Puis ces deux canaux se joignent au niveau du nœud 100.

## Revendications

1. Dispositif de régulation thermique (40 ; 60 ; 70), notamment de refroidissement, pour composant électrique susceptible de dégager de la chaleur lors de son fonctionnement, notamment pour un module de stockage d'énergie électrique, ce dispositif comportant une plaque supérieure et une plaque inférieure (11, 12) assemblée avec la plaque supérieure pour former ensemble une pluralité de canaux (3) de circulation pour un fluide caloporteur, notamment un fluide réfrigérant, notamment un fluide choisi parmi les fluides réfrigérants suivants R134a, R1234yf ou R744, dispositif comprenant une zone d'entrée de fluide et une zone de sortie de fluide, ces zones d'entrée et de sortie étant notamment situées dans une région thermiquement inopérante, la pluralité de canaux de circulation de fluide comprenant au moins deux groupes de canaux de passe formant chacun une passe de fluide dans une région thermiquement opérante configurée pour se trouver en vis-à-vis du ou des composants, ces canaux ayant notamment tous la même section de passage de fluide sur la majeure partie de leur longueur, la pluralité de canaux comprenant en outre au moins un canal d'entrée (49) reliant la zone d'entrée (41) et l'un des groupes de canaux de passe et au moins deux canaux de sortie reliant l'un des groupes de canaux de passe à la zone de sortie (42) de fluide, les canaux de passe de ce groupe se subdivisant en autant de sous-groupes (54, 55, 56) de canaux que de canaux de sortie (51, 52, 53) , chaque sous-groupe de canaux de passe rejoignant le canal de sortie qui lui est associé,
et en ce que le groupe de passe directement relié au canal d'entrée (49) est adjacent à l'un des sous-groupe (56) du groupe de passe relié au(x) canal/canaux de sortie, ce sous-groupe (56) ayant un nombre de canaux qui est le plus grand parmi les autres sous-groupes (54, 55) de ce groupe relié au(x) canal/canaux de sortie, le groupe de canaux relié au(x) canal/canaux de sortie (51, 52, 53) est subdivisé au moins en trois sous-groupes, le nombre de canaux dans les sous-groupes extérieurs est plus grand que le nombre de canaux du sous-groupe intercalaire situé entre les deux sous-groupes extérieurs,
les nombres de canaux dans les sous-groupes extérieurs sont différents entre eux.

2. Dispositif selon la revendication précédente, **caractérisé en ce que** le nombre de canal d'entrée est plus petit que le nombre de canaux de sortie, par exemple le nombre de canal d'entrée est d'un et le nombre de canaux de sortie est de trois ou plus.

3. Dispositif selon l'une des revendications précédentes, **caractérisé en ce que** le nombre de canaux de sortie est compris 3 et 6.

4. Dispositif selon la revendication 1, **caractérisé en ce que** le nombre de canaux des sous-groupes extérieurs comprend un de plus que le nombre de canaux du sous-groupe intercalaire, par exemple le nombre de canaux des sous-groupes extérieurs est de 5, et le nombre de canaux du sous-groupe intercalaire est de 4.

5. Dispositif selon l'une des revendications précédentes, **caractérisé en ce que** le groupe de canaux relié au canal d'entrée comporte plus de 2 canaux, notamment plus 4 canaux, voire au moins 6 canaux.

6. Dispositif selon l'une des revendications précédentes, **caractérisé en ce que** les canaux (3) dans chaque groupe sont parallèles entre eux sur une majeure partie de leur longueur.

7. Dispositif selon l'une des revendications précédentes, **caractérisé en ce que** ces canaux (3) sont sensiblement rectilignes sur la majeure partie de leur longueur.

8. Dispositif selon l'une des revendications précédentes, **caractérisé en ce que** les groupes de canaux de passe présente des nombres de canaux qui diffèrent d'une passe à l'autre, notamment ce nombre de canaux augmente, passe après passe, au fur et à mesure de l'écoulement.

9. Dispositif selon l'une des revendications précédentes, **caractérisé en ce que**, dans l'une au moins des passes, les canaux de cette passe sont disposés suivant une organisation ramifiée avec des nœuds où au moins deux canaux de la passe se connectent soit pour répartir, dans le cas d'un nœud de répartition, le fluide provenant d'un canal dans deux ou plus canaux, soit pour collecter, pour un nœud de collecte, le fluide provenant de deux canaux ou plus vers un canal de collecte, ces nœuds étant disposés de sorte à permettre un équilibrage de charge.

10. Dispositif selon la revendication précédente, **caractérisé en ce que**, dans la passe considérée, le nombre additionné de nœuds de répartition et de nœuds de collecte est le même pour tous les canaux de la passe.

11. Système comportant un composant électrique susceptible de dégager de la chaleur lors de son fonctionnement, notamment pour un module de stockage d'énergie électrique, et un dispositif de refroidissement selon l'une des revendications précédentes, agencé pour refroidir le composant, ce composant ou batterie étant en contact thermique avec la plaque supérieure du dispositif de refroidissement.

## Patentansprüche

1. Wärmeableitungsvorrichtung (40; 60; 70), insbesondere zur Kühlung, insbesondere für ein elektrisches Bauteil, das während seines Betriebs Wärme abgeben kann, insbesondere für ein elektrisches Energiespeichermodul, wobei diese Vorrichtung eine obere Platte und eine untere Platte (11, 12) umfasst, die mit der oberen Platte zusammengebaut sind, um eine Vielzahl von Zirkulationskanälen (3) für ein Wärmeträgerfluid, insbesondere ein Kältemittel, insbesondere ein Fluid, das aus den folgenden Kältemitteln R134a, R1234yf oder R744 ausgewählt ist, zu bilden, wobei die Vorrichtung eine Fluideintrittszone und eine Fluidaustrittszone umfasst, wobei diese Eintritts- und Austrittszonen insbesondere in einem thermisch inaktiven Bereich angeordnet sind, wobei die Vielzahl der Fluidzirkulationskanäle mindestens zwei Gruppen von Durchgangskanälen umfasst, die jeweils einen Fluiddurchgang in einem thermisch aktiven Bereich bilden, der so konfiguriert ist, dass er dem/den Bauteil(en) gegenüberliegt, wobei diese Kanäle alle insbesondere den gleichen Fluidströmungsquerschnitt über den größten Teil ihrer Länge aufweisen, wobei die Vielzahl der Kanäle ferner mindestens einen Eintrittskanal (49) umfasst, der die Fluideintrittszone (41) und eine der Gruppen von Durchgangskanälen verbindet, und mindestens zwei Austrittskanäle, die eine der Gruppen von Durchgangskanälen mit der Fluidaustrittszone (42) verbinden, wobei die Durchgangskanäle dieser Gruppe sich in ebenso viele Untergruppen (54, 55, 56) von Kanälen unterteilen, wie Austrittskanäle (51, 52, 53) vorhanden sind, wobei jede Untergruppe von Durchgangskanälen den ihr zugeordneten Austrittskanal verbindet, und **dadurch gekennzeichnet, dass** die Gruppe von Durchgangskanälen, die direkt mit dem Eintrittskanal (49) verbunden ist, an eine der Untergruppen (56) der Gruppe von Durchgangskanälen angrenzt, die mit dem/den Austrittskanal(en) verbunden ist/sind, wobei diese Untergruppe (56) eine Anzahl von Kanälen aufweist, die die größte unter den anderen Untergruppen (54, 55) dieser Gruppe ist, die mit dem/den Austrittskanal(en) verbunden ist/sind, wobei die Gruppe von Kanälen, die mit dem/den Austrittskanal(en) (51, 52, 53) verbunden ist/sind, in mindestens drei Untergruppen unterteilt ist, wobei die Anzahl der Kanäle in den äußeren Untergruppen größer ist als die Anzahl der Kanäle in der dazwischenliegenden Untergruppe, die zwischen den beiden äußeren Untergruppen liegt, wobei die Anzahl der Kanäle in den äußeren Untergruppen voneinander verschieden ist.

2. Vorrichtung nach dem vorhergehenden Anspruch, **dadurch gekennzeichnet, dass** die Anzahl der Eintrittskanäle kleiner ist als die Anzahl der Austrittskanäle, zum Beispiel die Anzahl der Eintrittskanäle eins und die Anzahl der Austrittskanäle drei oder mehr beträgt.

3. Vorrichtung nach einem der vorhergehenden Ansprüche, **dadurch gekennzeichnet, dass** die Anzahl der Austrittskanäle zwischen 3 und 6 liegt.

4. Vorrichtung nach Anspruch 1, **dadurch gekennzeichnet, dass** die Anzahl der Kanäle der äußeren Untergruppen einen mehr umfasst als die Anzahl der Kanäle der dazwischenliegenden Untergruppe, zum Beispiel die Anzahl der Kanäle der äußeren Untergruppen 5 und die Anzahl der Kanäle der dazwischenliegenden Untergruppe 4 beträgt.

5. Vorrichtung nach einem der vorhergehenden Ansprüche, **dadurch gekennzeichnet, dass** die mit dem Eintrittskanal verbundene Kanalgruppe mehr als 2 Kanäle, insbesondere mehr als 4 Kanäle, oder mindestens 6 Kanäle umfasst.

6. Vorrichtung nach einem der vorhergehenden Ansprüche, **dadurch gekennzeichnet, dass** die Kanäle (3) in jeder Gruppe über den größten Teil ihrer Länge parallel zueinander verlaufen.

7. Vorrichtung nach einem der vorhergehenden Ansprüche, **dadurch gekennzeichnet, dass** diese Kanäle (3) über den größten Teil ihrer Länge im Wesentlichen geradlinig sind.

8. Vorrichtung nach einem der vorhergehenden Ansprüche, **dadurch gekennzeichnet, dass** die Gruppen von Durchgangskanälen unterschiedliche Anzahlen von Kanälen von einem Durchgang zum anderen aufweisen, insbesondere diese Anzahl mit fortschreitendem Fluss zunimmt oder stabil bleibt.

9. Vorrichtung nach einem der vorhergehenden Ansprüche, **dadurch gekennzeichnet, dass** in mindestens einem der Durchgänge die Kanäle dieses Durchgangs nach einer verzweigten Organisation mit Knoten angeordnet sind, an denen mindestens zwei Kanäle des Durchgangs entweder zur Verteilung, im Falle eines Verteilungsknotens, das aus einem Kanal kommende Fluid in zwei oder mehr Kanäle leiten, oder zum Sammeln, für einen Sammelknoten, das aus zwei oder mehr Kanälen kommende Fluid in einen Sammelkanal leiten, wobei diese Knoten so angeordnet sind, dass ein Lastausgleich ermöglicht wird.

10. Vorrichtung nach dem vorhergehenden Anspruch, **dadurch gekennzeichnet, dass** in dem betrachteten Durchgang die Summe der Anzahl der Verteilungsknoten und der Sammelknoten für alle Kanäle des Durchgangs gleich ist.

11. System, umfassend ein elektrisches Bauteil, das während seines Betriebs Wärme abgeben kann, insbesondere für ein elektrisches Energiespeichermodul, und eine Kühlvorrichtung nach einem der vorhergehenden Ansprüche, die zur Kühlung des Bauteils angeordnet ist, wobei dieses Bauteil oder die Batterie in thermischem Kontakt mit der oberen Platte der Kühlvorrichtung steht.

## Claims

1. Thermal regulation device (40; 60; 70), particularly for cooling, particularly for an electrical component capable of generating heat during its operation, particularly for an electrical energy storage module, this device comprising an upper plate and a lower plate (11, 12) assembled with the upper plate to form together a plurality of circulation channels (3) for a heat transfer fluid, particularly a refrigerant fluid, particularly a fluid chosen from the following refrigerant fluids R134a, R1234yf or R744, the device comprising a fluid inlet zone and a fluid outlet zone, these inlet and outlet zones being particularly located in a thermally inoperative region, the plurality of fluid circulation channels comprising at least two groups of pass channels each forming a fluid pass in a thermally operative region configured to be opposite the component(s), these channels all having notably the same fluid passage section over most of their length, the plurality of channels further comprising at least one inlet channel (49) connecting the fluid inlet zone (41) and one of the groups of pass channels and at least two outlet channels connecting one of the groups of pass channels to the fluid outlet zone (42), the pass channels of this group subdividing into as many subgroups (54, 55, 56) of channels as there are outlet channels (51, 52, 53), each subgroup of pass channels joining the outlet channel associated with it, and in that the group of pass channels directly connected to the inlet channel (49) is adjacent to one of the subgroups (56) of the group of pass channels connected to the outlet channel(s), this subgroup (56) having a number of channels which is the largest among the other subgroups (54, 55) of this group connected to the outlet channel(s), the group of channels connected to the outlet channel(s) (51, 52, 53) is subdivided into at least three subgroups, the number of channels in the outer subgroups being greater than the number of channels in the intercalary subgroup located between the two outer subgroups, the number of channels in the outer subgroups being different from each other.

2. Device according to the preceding claim, **characterized in that** the number of inlet channels is smaller than the number of outlet channels, for example the number of inlet channels is one and the number of outlet channels is three or more.

3. Device according to one of the preceding claims, **characterized in that** the number of outlet channels is between 3 and 6.

4. Device according to claim 1, **characterized in that** the number of channels in the outer subgroups comprises one more than the number of channels in the intercalary subgroup, for example the number of channels in the outer subgroups is 5, and the number of channels in the intercalary subgroup is 4.

5. Device according to one of the preceding claims, **characterized in that** the group of channels connected to the inlet channel comprises more than 2 channels, particularly more than 4 channels, or at least 6 channels.

6. Device according to one of the preceding claims, **characterized in that** the channels (3) in each group are parallel to each other over most of their length.

7. Device according to one of the preceding claims, **characterized in that** these channels (3) are substantially rectilinear over most of their length.

8. Device according to one of the preceding claims, **characterized in that** the groups of pass channels have different numbers of channels from one pass to another, particularly this number increases, or remains stable, as the flow progresses.

9. Device according to one of the preceding claims, **characterized in that**, in at least one of the passes, the channels of this pass are arranged according to a branched organization with nodes where at least two channels of the pass connect either to distribute, in the case of a distribution node, the fluid coming from one channel into two or more channels, or to collect, for a collection node, the fluid coming from two or more channels into one collection channel, these nodes being arranged so as to allow charge balancing.

10. Device according to the preceding claim, **characterized in that**, in the considered pass, the sum of the number of distribution nodes and collection nodes is the same for all channels of the pass.

11. System comprising an electrical component capable of generating heat during its operation, particularly for an electrical energy storage module, and a cooling device according to one of the preceding claims, arranged to cool the component, this component or battery being in thermal contact with the upper plate of the cooling device.
